# EUROPÄISCHE PATENTANMELDUNG

(11) **EP 4 792 964 A1**
(43) Veröffentlichungstag der Anmeldung: **19.08.2026**
(21) Anmeldenummer: 25157924.9
(22) Anmeldetag: 14.02.2025
(51) Int. Cl.: B23D 47/00, B27B 5/29

(54) **WERKZEUGMASCHINE**

(71) Anmelder: Mafell AG, 78727 Oberndorf a.N. (DE)
(72) Erfinder: DAUS, Felix, 78655 Dunningen-Seedorf (DE); BASALLA, Felix, 78727 Oberndorf-Beffendorf (DE); SCHILLINGER, Robin, 72290 Loßburg (DE)
(74) Vertreter: Manitz Finsterwald Patent- und Rechtsanwaltspartnerschaft mbB

(57) **Zusammenfassung**

Eine Werkzeugmaschine (10) umfasst einen Arbeitstisch (11), der eine Tischebene definiert, einen Neigearm (13), der ein Arbeitsaggregat mit einem Arbeitswerkzeug (15) aufweist und um eine zur Tischebene parallele Neigeachse neigbar gelagert ist, ein Betätigungselement (17) zum Wählen zwischen zumindest einem ersten Neigemodus, in dem der Neigearm (13) stufenlos innerhalb eines vorbestimmten Winkelbereichs verstellt werden kann, und einem zweiten Neigemodus, in dem der Neigearm (13) in eine von mehreren vorbestimmten Winkelpositionen verstellt werden kann, ein Indexelement (37), das einen dem ersten Neigemodus entsprechenden ersten Indexbereich und einen dem zweiten Neigemodus entsprechenden zweiten Indexbereich aufweist, und eine mit dem Betätigungselement (17) verbundene Rasteinheit (19, 21), wobei eine Drehbetätigung des Betätigungselements (17) eine Längsbewegung der Rasteinheit (19, 21)bewirkt, um selektiv mit dem ersten Indexbereich oder dem zweiten Indexbereich zusammenzuwirken, und wobei das Indexelement (37) und die Rasteinheit (19, 21) bei einer Neigebewegung des Neigearms (13) relativ zueinander entsprechend der Neigebewegung bewegt werden.

## Beschreibung

Die Erfindung betrifft eine Werkzeugmaschine, insbesondere eine Kapp- und Gehrungssäge, mit einem Arbeitstisch, der eine Tischebene definiert, und einem Neigearm, der ein Arbeitsaggregat mit einem Arbeitswerkzeug aufweist und um eine zur Tischebene parallele Neigeachse neigbar gelagert ist.

Beispielsweise bei Kapp- und Gehrungssägen ist es in der Regel erforderlich, ein Sägeaggregat um zwei definierte Achsen schwenken zu können, nämlich um eine zum Arbeitstisch senkrechte Achse (Gehrung) und um eine zum Arbeitstisch parallele Achse (Neigung), wobei die vorliegende Erfindung das Schwenken um die Neigeachse betrifft.

Ausgehend von einer Neutralstellung, in der der Neigewinkel des Neigearms 0° beträgt, kann der Neigearm üblicherweise innerhalb eines bestimmten Winkelbereichs, beispielsweise von -45° bis +45°, sowohl im Uhrzeigersinn als auch gegen den Uhrzeigersinn stufenlos oder in vorbestimmte Winkelstellungen geneigt werden. Der Arbeitstisch fungiert dabei als feste Basis, um die der Neigearm geneigt wird. Eine solche Säge ist beispielsweise in der Druckschrift US 2004/0089125 A1 offenbart.

Die vorliegende Erfindung beruht auf der Aufgabe, das Einstellen des Neigewinkels zu verbessern.

Diese Aufgabe wird durch eine Werkzeugmaschine mit den Merkmalen des Anspruchs 1 gelöst. Vorteilhafte Weiterbildungen sind Gegenstand der Unteransprüche und ergeben sich aus der Beschreibung sowie den Zeichnungen.

Die erfindungsgemäße Werkzeugmaschine ist insbesondere eine Kapp- und Gehrungssäge und umfasst:
einen Arbeitstisch, der eine Tischebene definiert,
einen Neigearm, der ein Arbeitsaggregat mit einem Arbeitswerkzeug aufweist und um eine zur Tischebene parallele Neigeachse neigbar gelagert ist,
ein Betätigungselement zum Wählen zwischen zumindest einem ersten Neigemodus, in dem der Neigearm stufenlos innerhalb eines vorbestimmten Winkelbereichs verstellt werden kann, und einem zweiten Neigemodus, in dem der Neigearm in eine von mehreren vorbestimmten Winkelpositionen verstellt werden kann, ein Indexelement, das einen dem ersten Neigemodus entsprechenden ersten Indexbereich und einen dem zweiten Neigemodus entsprechenden zweiten Indexbereich aufweist, und
eine mit dem Betätigungselement verbundene Rasteinheit, wobei eine Drehbetätigung des Betätigungselements eine Längsbewegung der Rasteinheit bewirkt, um selektiv mit dem ersten Indexbereich oder dem zweiten Indexbereich zusammenzuwirken, und wobei das Indexelement und die Rasteinheit bei einer Neigebewegung des Neigearms relativ zueinander entsprechend der Neigebewegung bewegt werden.

Mit der Werkzeugmaschine sind somit wenigstens zwei Neigemodi möglich, nämlich einer zur stufenlosen Neigungseinstellung (erster Neigemodus) und einer, indem mehrere vorbestimmte Neigungswinkel eingestellt werden können (zweiter Neigemodus). Die Einstellung des jeweiligen Modus erfolgt durch das Betätigungselement und die Rasteinheit, die mit einem der Indexbereiche zusammenwirkt, wobei die Längsbewegung der Rasteinheit Einfluss darauf hat, mit welchem der Indexbereiche die Rasteinheit zusammenwirkt, und somit darauf, welcher der Neigemodi aktiv ist.

Das Indexelement kann als insbesondere symmetrische Scheibe ausgebildet sein. Vorzugsweise verläuft die Achse des Indexelements parallel versetzt, also nicht koaxial, zur Achse des Betätigungselements und der Rasteinheit. Das Indexelement kann so im Arbeitstisch angeordnet sein, dass es bei einer Neigebewegung des Neigearms mitgedreht wird. Hierzu bietet es sich an, dass die Achse des Indexelements koaxial zur Neigeachse des Neigearms verläuft.

Gemäß der vorliegenden Erfindung bewirkt das Drehen des Betätigungselement durch einen Nutzer eine Längsbewegung der Rasteinheit zum Zusammenwirken mit dem ersten oder dem zweiten Indexbereich. Folglich kann durch eine einfache Drehbewegung des Betätigungselements zwischen den Neigungsmodi gewechselt werden.

Das Betätigungselement kann eine Wälzkontur aufweisen, die bei der Drehbetätigung des Betätigungselements über eine Nocke läuft, um die Längsbewegung der Rasteinheit zu bewirken. Durch das Zusammenwirken der Wälzkontur mit der insbesondere fest am Arbeitstisch angebrachten Nocke kann die Drehbewegung des Betätigungselements letztlich eine Längsbewegung der Rasteinheit bewirken. Das Betätigungselement kann etwa mit einem Materialabschnitt versehen sein, an dessen freiem Ende die Wälzkontur ausgebildet ist. Der Materialabschnitt kann beispielsweise eine Flanke mit einer ebenen Oberfläche aufweisen, und die Nocke kann eine korrespondierende Flanke aufweisen, wobei die beiden Flanken gegeneinander laufen.

Vorzugsweise weist die Rasteinheit einen Rastbolzen auf, welcher an seinem dem Betätigungselement abgewandten Ende einen insbesondere konisch zulaufenden Vorsprung aufweist. Der konisch zulaufende Vorsprung dient insbesondere zum Eingreifen in entsprechende Öffnungen des Indexelements, auf die später noch näher eingegangen wird. Durch die Konizität wird ein spielfreier und genauer Eingriff ermöglicht.

Die Rasteinheit kann ferner neben dem Rastbolzen eine Lagerungsstange aufweisen, die in axialer Richtung an einem Ende fest mit dem Betätigungselement und an dem anderen Ende mit dem Rastbolzen verbunden ist. Die Verbindung des Rastbolzens mit der Lagerungsstange kann insbesondere durch Verschrauben erfolgen. Insbesondere kann der Rastbolzen einen Zapfen mit einem Außengewinde aufweisen, der in ein entsprechendes Innengewinde in einer Ausnehmung der Lagerungsstange eingeschraubt werden kann. Grundsätzlich sind auch andere Arten der Befestigung möglich, die gewährleisten, dass Rastbolzen und Lagerungsstange in Axialrichtung gemeinsam bewegt werden.

In bevorzugter Ausgestaltung folgen die Indexbereiche in Axialrichtung des Indexelements aufeinander. Der zweite Indexbereich kann einen Wandabschnitt aufweisen, der eine Vielzahl von Öffnungen oder Bohrungen aufweist, welche jeweils einer der Winkelpositionen entsprechen.

Vorzugsweise sind die Öffnungen oder Bohrungen entlang eines Kreisbogens um die Neigeachse angeordnet, sodass das Zentrum einer jeden Öffnung oder Bohrung auf dem Kreisbogen liegt. Der Kreisbogen ist insbesondere so angeordnet, dass er von der Verlängerung der Achse der Rasteinheit geschnitten wird.

Vorzugsweise weist das Indexelement Seitenwandabschnitte auf, die den ersten Indexbereich in Neigungsrichtung begrenzen. Insbesondere kann das Indexelement eine durch die Seitenwandabschnitte seitlich begrenzte Materialausnehmung aufweisen, die dem ersten Indexbereich entspricht.

Vorteilhaft kann die Rasteinheit zu dem Indexelement hin vorgespannt sein, insbesondere durch eine die (Schrauben-)Druckfeder, sie sich an einer Lagerhülse oder einer Struktur des Arbeitstischs abstützt.

In bevorzugter Ausgestaltung ist die Rasteinheit in einer Lagerhülse im Arbeitstisch axial beweglich gelagert. Vorzugsweise weist die Rasteinheit, insbesondere der Rastbolzen, eine zylindrische Mantelfläche zur Lagerung in der Lagerhülse auf.

Das Indexelement kann bei einer Neigebewegung des Neigearms mitbewegt, also mitgedreht, werden. Da die Achse des Indexelements vorzugsweise koaxial zur Neigeachse ist, geht die Neigung des Neigearms mit einer Drehbewegung des Indexelements um seine Achse einher, sodass das Indexelement relativ zur Rasteinheit gedreht wird.

Vorzugsweise entsprechen die vorbestimmten Winkelpositionen im zweiten Neigemodus einer Neigung des Neigearms um 0°, +/- 15°, +/- 22,5° und/oder +/- 30° entsprechen. Dabei handelt es sich um häufig verlangte Winkelmaße bei der Holzbearbeitung. Insbesondere erstreckt sich der vorbestimmte Winkelbereich im ersten Neigemodus über einen Neigungswinkel von -45° bis +45°.

Das Betätigungselement kann ferner zum Auswählen eines dritten Neigemodus ausgebildet sein, in dem der Neigearm stufenlos innerhalb eines zweiten vorbestimmten Winkelbereichs verstellt werden kann, der größer ist als der erste vorbestimmte Winkelbereich. Insbesondere kann sich der zweite vorbestimmte Winkelbereich im dritten Neigemodus über einen Neigungswinkel von -48° bis +48°. Dies kann nützlich sein, da es hin und wieder vorkommt, dass Winkel geringfügig jenseits der +/- 45° benötigt werden, um etwa kleinere Unebenheiten zu korrigieren oder um bei Stoßverbindungen optische Nullfugen herzustellen. Bei der Erfindung kann die Auswahl des dritten Neigemodus etwa dadurch erfolgen, dass durch das Betätigungselement die Rasteinheit zum Benutzer hin bewegt wird, also von dem Indexelement weg, sodass die Rasteinheit nicht mehr durch die Seitenwandabschnitte begrenzt wird.

Vorzugsweise umfasst die Werkzeugmaschine außerdem einen Klemmmechanismus zum Feststellen des Neigearms in einer gewünschten Neigeposition. Der Klemmmechanismus kann über einen Hebel am Arbeitstisch aktiviert und deaktiviert werden. Zusätzlich kann im Neigearm eine ausreichend dimensionierte Schenkelfeder verbaut sein, die den Neigearm stabil hält, sodass der Neigearm, auch wenn der Klemmmechanismus deaktiviert ist, bei Loslassen durch den Benutzer nicht wegkippt.

Nachfolgend wird die Erfindung rein beispielhaft unter Bezugnahme auf ein in den Zeichnungen schematisch gezeigtes Ausführungsbeispiel erläutert. Dabei zeigt
- Fig. 1: eine perspektivische Ansicht einer Werkzeugmaschine gemäß einem Ausführungsbeispiel der vorliegenden Erfindung,
- Fig. 2: eine weitere perspektivische Ansicht der Werkzeugmaschine aus Fig. 1,
- Fig. 3: eine perspektivische Ansicht eines Endes einer Lagerungsstange und einer Nocke bei abmontiertem Betätigungselement,
- Fig. 4: eine weitere perspektivische Ansicht des Endes der Lagerungsstange und der Nocke bei abmontiertem Betätigungselement,
- Fig. 5: eine Schnittansicht, in der die Lagerungsstange ausgeblendet ist und die Wälzkontur des Betätigungselement die Nocke kontaktiert,
- Fig. 6: eine perspektivische Ansicht eines Rastbolzens,
- Fig. 7: eine perspektivische Ansicht eines Indexelements und
- Fig. 8: eine Querschnittansicht durch den Arbeitstisch der Werkzeugmaschine aus Fig. 1, welche die Rasteinheit und das Indexelement zeigt.

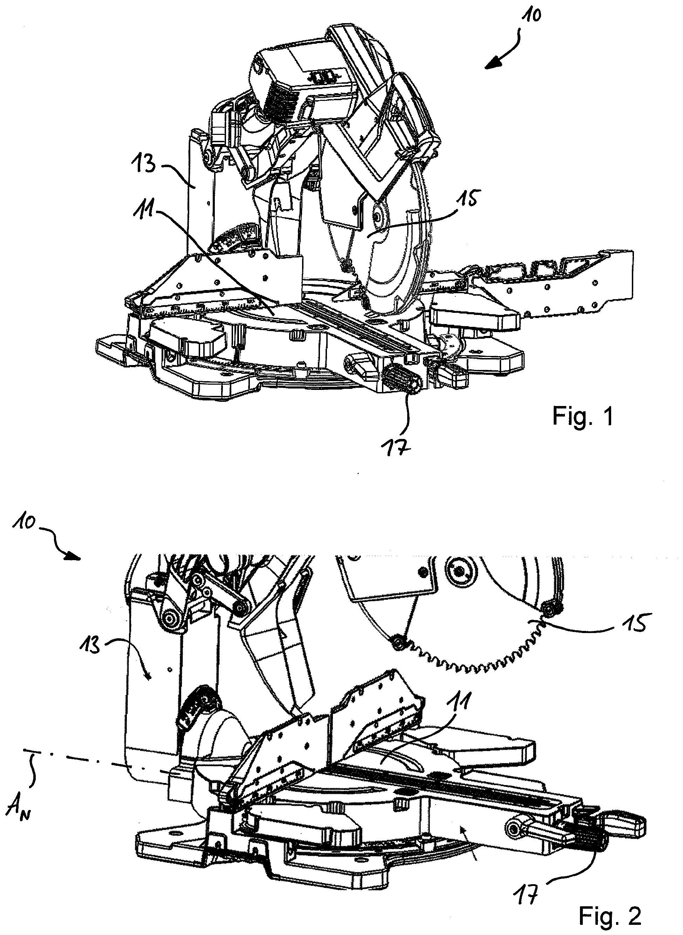

Fig. 1 und 2 zeigen unterschiedliche Ansichten eines Ausführungsbeispiels einer erfindungsgemäßen Werkzeugmaschine 10, die als Kapp- und Gehrungssäge ausgebildet ist. Die Kapp- und Gehrungssäge 10 weist unter anderem einen Arbeitstisch 11 und einen zum Arbeitstisch 11 neigbaren Neigearm 13 mit einem Arbeitsaggregat auf. Das Arbeitsaggregat umfasst in diesem Ausführungsbeispiel ein zum rotieren antreibbares Arbeitswerkzeug 15, nämlich ein Sägeblatt.

Bei der Kapp- und Gehrungssäge kann das Arbeitsaggregat relativ zum Arbeitstisch 11 um zwei definierte Achsen geschwenkt werden, nämlich um eine zum Arbeitstisch 11 senkrechte Achse (nicht dargestellt, Gehrung) und um eine zum Arbeitstisch parallele Neigeachse A_{N} (Neigung). Die vorliegende Erfindung betrifft das Schwenken um die Neigeachse A_{N}.

Dabei zeigen Fig. 1 und 2 den Neigearm 13 in seiner Neutralstellung, in welcher der Neigewinkel des Neigearms 0° beträgt. In dieser Neutralstellung ist die Rotationsachse des Arbeitswerkzeug 15 parallel zu einer Tischebene des Arbeitstischs 11 und verläuft insbesondere horizontal. Die Tischebene erstreckt sich wiederum parallel zur Auflagefläche des Arbeitstischs 11.

An dem Arbeitstisch 11 ist ein Betätigungselement 17 vorgesehen, welches durch einen Benutzer oder Anwender der Werkzeugmaschine 10 betätigt werden kann. Der Benutzer kann das Betätigungselement 17 im vorliegenden Ausführungsbeispiel durch Drehen in drei verschiedene Drehpositionen bewegen, wobei die drei Drehpositionen jeweils einem Neigemodus entsprechen. Mithin kann durch Drehen des Betätigungselements 17 zwischen einem ersten Neigemodus, einem zweiten Neigemodus und einem dritten Neigemodus gewählt werden, die nachfolgend noch genauer beschrieben werden.

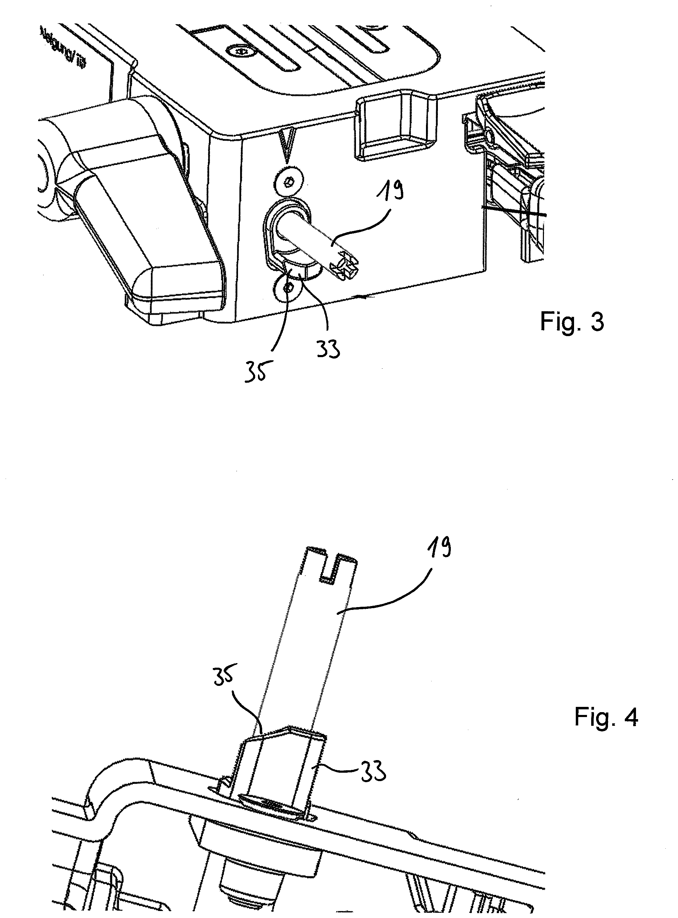

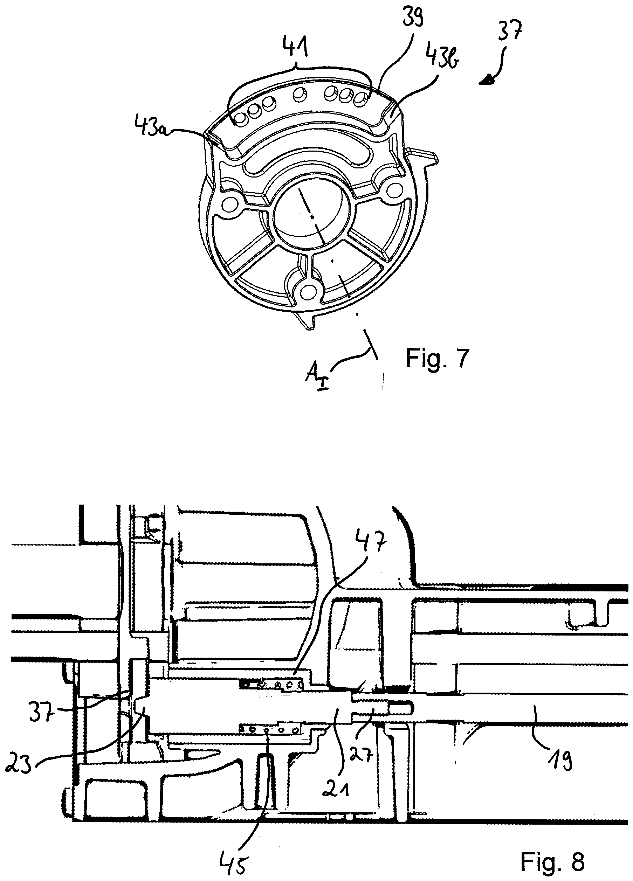

Wie insbesondere Fig. 3 und 4 zeigen, ragt aus dem Arbeitstisch 11 ein Ende einer Lagerungsstange 19 heraus, die sich in das Innere des Arbeitstischs 11 erstreckt, s. Fig. 8. Zudem ist in unmittelbarer Nähe des Endes der Lagerungsstange 19 eine Nocke 33 am Arbeitstisch 11 vorgesehen. Wie Fig. 3 bis 5 zeigen, weist die Nocke 33 eine Wälzkontur 35 auf. Die Wälzkontur 35 umfasst im vorliegenden Beispiel einen schräg zur Achse der Lagerungsstange 19 verlaufenden Abschnitt und einen sich direkt daran anschließenden orthogonal zur Achse der Lagerungsstange 19 verlaufenden Abschnitt.

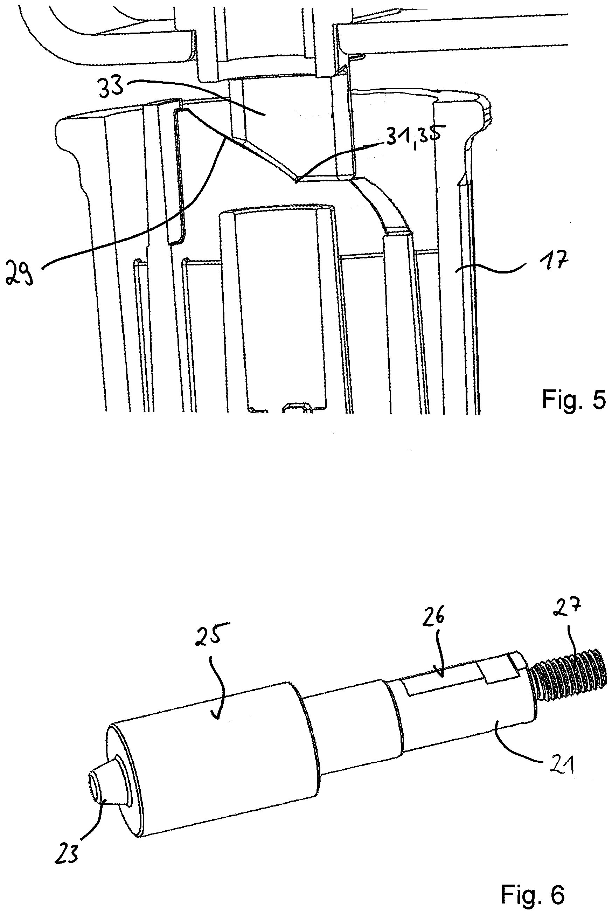

Wie Fig. 5 zeigt, weist das Betätigungselement 17 im Inneren ebenfalls eine Wälzkontur 31 auf, die eine Flanke 29 aufweist, welche zu dem schräg verlaufenden Abschnitt der Wälzkontur 35 korrespondiert. In Fig. 5 kontaktiert der schräg verlaufende Abschnitt der Wälzkontur 35 die Flanke 29, und der orthogonal verlaufende Abschnitt der Wälzkontur 35 kontaktiert einen korrespondieren Abschnitt der Wälzkontur 31.

Das Betätigungselement 17 wird fest auf das herausstehende Ende der Lagerungsstange 19 montiert, sodass die Lagerungsstange 19 bei einer Drehbewegung des Betätigungselements 17 mitgedreht wird und zudem bei einer Bewegung in axialer Richtung des Betätigungselements 17 mit vor oder zurück bewegt wird. Betätigungselement 17 und Lagerungsstange 19 sind folglich sowohl in Axialrichtung als auch in Umfangsrichtung miteinander gekoppelt.

Wird das Betätigungselement 17 durch den Benutzer gedreht, läuft die Wälzkontur 31 über die korrespondierende Wälzkontur 35 der Nocke 33, wodurch die Drehbewegung des Betätigungselements 17 eine axiale Bewegung des Betätigungselements 17 und somit eine entsprechende axiale Bewegung der Lagerungsstange 19 bewirkt.

An ihrem anderen Ende ist die Lagerungsstange 19 indes mit einem Rastbolzen 21 verbunden. Im Rahmen dieser Erfindung können die Lagerungsstange 19 und der Rastbolzen 21 zusammen auch als Rasteinheit bezeichnet werden. Grundsätzlich ist auch denkbar, dass die Rasteinheit einteilig ausgestaltet ist. Im vorliegenden Ausführungsbeispiel erfolgt die Verbindung des Rastbolzens 21 mit der Lagerungsstange 19 als Schraubverbindung, was aus Fig. 8 ersichtlich ist. Dazu ist der Rastbolzen 21 mit einem Zapfen 27 versehen, der ein Außengewinde aufweist (s. Fig. 6), und die Lagerungsstange 19 weist an ihrem Ende eine Bohrung mit einem Innengewinde auf.

Der Rastbolzen 21 umfasst ferner an seinem dem Zapfen 27 gegenüberliegenden Ende einen konisch zulaufenden Vorsprung 23. Zwischen Vorsprung 23 und Zapfen 27 weist der Rastbolzen 21 eine zylindrische Grundform auf, wobei der Durchmesser des Zylinders zum Vorsprung 23 hin größer wird, d.h. der Rastbolzen 21 weist zumindest eine und im vorliegenden Ausführungsbeispiel mehrere Stufen oder Absätze auf. Die Mantelfläche 25 des zylindrischen Rastbolzens 21 dient indes als Lagerfläche für die Lagerung des Rastbolzens 21 in einer Lagerhülse 47, siehe Fig. 8. Ein Teil der Mantelfläche 25 ist mit einer länglichen Materialabtragung 26 versehen, die in diesem Ausführungsbeispiel durch Fräsen hergestellt ist. Im Bereich der Materialabtragung ist eine weitere noch tiefere, jedoch kleinere Materialabtragung vorgesehen, die insbesondere dazu dient, mit einem Maulschlüssel den Rastbolzen 21 gegen die Lagerungsstange 19 zu verschrauben.

In Fig. 7 ist ein Indexelement 37 gezeigt. Das Indexelement 37 ist im vorliegenden Ausführungsbeispiel als achsensymmetrische Indexscheibe ausgestaltet. Das Indexelement 37 weist einen Wandabschnitt 39 auf, der sich im Wesentlichen kreisbogenförmig um die Achse A_{I} des Indexelements 37 erstreckt. Der Wandabschnitt 39 ist mit mehreren Öffnungen 41 versehen, die in diesem Ausführungsbeispiel als Durchgangsbohrungen durch den Wandabschnitt 39 ausgebildet sind und die entlang eines Kreisbogens um die Achse A_{I} des Indexelements 37 angeordnet sind.

Das Indexelement 37 weist ferner Seitenwandabschnitte 43a, 43b auf. Der Wandabschnitt 39 schließt sich in axialer Richtung des Indexelements 37 den Seitenwandabschnitten 43a, 43b. Die Seitenwandabschnitte 43a, 43b definieren einen ersten Indexbereich und begrenzen diesen in Neigungsrichtung, und der Wandabschnitt 39 definiert einen zweiten Indexbereich des Indexelements 37. Die Indexbereiche folgen somit in Axialrichtung des Indexelements 37 aufeinander.

Das Indexelement 37 ist so im Arbeitstisch 11 angeordnet, dass es bei einer Neigebewegung des Neigearms 13 mit diesem mitgedreht wird. Die Achse A_{I} des Indexelements 37 verläuft dabei koaxial zur Neigeachse A_{N}.

Der Rastbolzen 21 ist durch eine Druckfeder 45 zu dem Indexelement 37 hin vorgespannt. Die Druckfeder 45 stützt sich einerseits an der Lagerhülse 47 und andererseits an einem der Absätze des Rastbolzens 21 ab. Dabei umgibt die Druckfeder 45 die Materialabtragung 26, wodurch Luft aufgrund der Materialabtragung 26 auch aus dem Bereich der Druckfeder 45 entweichen kann. Dies dient dazu, eine Kompression der Luft in diesem Bereich zu verhindern. Anderenfalls wäre eine unerwünschte Dämpfung zwischen dem Rastbolzen 21 und der Lagerhülse 47 die Folge. Die relative Bewegung zwischen Rastbolzen 21 und Lagerhülse 47 würde dadurch gedämpft oder gar verhindert. Im vorliegenden Ausführungsbeispiel kann der Benutzer durch Drehen des Betätigungselements 17 wie oben beschrieben die axiale Position des Rastbolzens 21 einstellen und dadurch einen von drei verschiedenen Neigemodi auswählen.

Im ersten Neigemodus befindet sich der Vorsprung 23 in dem axialen Bereich des Indexelements 37, der seitlich von den Seitenwandabschnitten 43a, 43b begrenzt wird. Im ersten Neigemodus kann der Neigearm 13 ausgehend von der Neutralstellung (0°) sowohl im Uhrzeigersinn als auch gegen den Uhrzeigersinn stufenlos innerhalb des von den Seitenwandabschnitten 43a, 43b begrenzten und somit vorbestimmten Winkelbereichs, hier -45° bis +45°, verstellt werden.

Im zweiten Neigemodus befindet sich der Vorsprung 23 in dem axialen Bereich des Indexelements 37, der durch den Wandabschnitt 39 definiert wird. Der konische Vorsprung 23 drückt aufgrund der Kraft der Feder 45 in diesem Neigemodus gegen den Wandabschnitt. Dabei entspricht jede der Durchgangsbohrungen 41 einer exakten, vorbestimmten Winkelposition, nämlich hier 0°, +/- 15°, +/- 22,5° und +/- 30°. Bei diesen Winkelpositionen handelt es sich um häufig verwendete Winkelpositionen in der Holzverarbeitung. Im zweiten Neigemodus kann der Neigearm 13 daher jeweils in eine dieser mehreren vorbestimmten Winkelpositionen verstellt werden. In dieser Position rastet der Rastbolzen 21 unterstützt durch die Feder 45 in der jeweiligen Durchgangsbohrung 41 ein, wodurch die gewählte Neigung sehr präzise gehalten werden kann. Die Konizität des Vorsprungs 23 ermöglicht ein präzises und spielfreies Einrasten.

Im dritten Neigemodus befindet sich der Vorsprung 23 vom Rastbolzen 21 aus betrachtet vor dem axialen Bereich des Indexelements 37, der seitlich von den Seitenwandabschnitten 43a, 43b begrenzt wird. Im dritten Neigemodus begrenzen die Seitenwandabschnitte 43a, 43b die Neigung daher nicht, sodass stufenlos auch größere Winkel als die des vorbestimmten Winkelbereichs des ersten Neigemodus eingestellt werden können. Eine Begrenzung durch das Indexelement 37 erfolgt dann nicht, jedoch kann die Werkzeugmaschine 10 mit anderen, in diesem Zusammenhang nicht näher beschriebenen Begrenzungen versehen sein, die etwa eine Begrenzung auf einen Winkelbereich von -48° bis 48° bewirken.

Somit kann durch Drehbetätigung des Betätigungselements 17 schnell und einfach zwischen den drei Neigemodi gewählt werden. Das Einstellen der Neigung des Neigearm 13 wird dadurch vereinfacht.

### Bezugszeichenliste

- 10: Werkzeugmaschine
- 11: Arbeitstisch
- 13: Neigearm
- 15: Arbeitswerkzeug
- 17: Betätigungselement
- 19: Lagerungsstange
- 21: Rastbolzen
- 23: Vorsprung
- 25: Mantelfläche
- 26: Materialabtragung
- 27: Zapfen
- 29: Flanke
- 31: Wälzkontur
- 33: Nocke
- 35: Wälzkontur
- 37: Indexelement
- 39: Wandabschnitt
- 41: Öffnung
- 43a: Seitenwandabschnitt
- 43b: Seitenwandabschnitt
- 45: Feder
- 47: Lagerhülse

- A_{I}: Achse (Indexelement)
- A_{N}: Neigeachse

## Patentansprüche

1. Werkzeugmaschine (10), insbesondere Kapp- und Gehrungssäge, umfassend
einen Arbeitstisch (11), der eine Tischebene definiert,
einen Neigearm (13), der ein Arbeitsaggregat mit einem Arbeitswerkzeug (15) aufweist und um eine zur Tischebene parallele Neigeachse (A_{N}) neigbar gelagert ist,
ein Betätigungselement (17) zum Wählen zwischen zumindest einem ersten Neigemodus, in dem der Neigearm (13) stufenlos innerhalb eines vorbestimmten Winkelbereichs verstellt werden kann, und einem zweiten Neigemodus, in dem der Neigearm (13) in eine von mehreren vorbestimmten Winkelpositionen verstellt werden kann,
ein Indexelement (37), das einen dem ersten Neigemodus entsprechenden ersten Indexbereich und einen dem zweiten Neigemodus entsprechenden zweiten Indexbereich aufweist, und
eine mit dem Betätigungselement (17) verbundene Rasteinheit (19, 21), wobei eine Drehbetätigung des Betätigungselements (17) eine Längsbewegung der Rasteinheit (19, 21) bewirkt, um selektiv mit dem ersten Indexbereich oder dem zweiten Indexbereich zusammenzuwirken, und wobei das Indexelement (37) und die Rasteinheit (19, 21) bei einer Neigebewegung des Neigearms (13) relativ zueinander entsprechend der Neigebewegung bewegt werden.

2. Werkzeugmaschine (10) nach Anspruch 1,
wobei das Betätigungselement (17) eine Wälzkontur (31) aufweist, die bei der Drehbetätigung des Betätigungselements (17) über eine Nocke (33) läuft, um die Längsbewegung der Rasteinheit (19, 21) zu bewirken.

3. Werkzeugmaschine (10) nach Anspruch 1 oder 2,
wobei die Rasteinheit (19, 21) einen Rastbolzen (21) aufweist, welcher an seinem dem Betätigungselement (17) abgewandten Ende einen insbesondere konisch zulaufenden Vorsprung (23) aufweist.

4. Werkzeugmaschine (10) nach Anspruch 3,
wobei die Rasteinheit (19, 21) ferner eine Lagerungsstange (19) aufweist, die in axialer Richtung an einem Ende fest mit dem Betätigungselement (17) und an dem anderen Ende mit dem Rastbolzen (21) verbunden ist.

5. Werkzeugmaschine (10) nach einem der vorstehenden Ansprüche, wobei die Indexbereiche in Axialrichtung des Indexelements (37) aufeinander folgen.

6. Werkzeugmaschine (10) nach einem der vorstehenden Ansprüche, wobei der zweite Indexbereich einen Wandabschnitt (39) aufweist, der eine Vielzahl von Öffnungen (41) aufweist, welche jeweils einer der Winkelpositionen entsprechen.

7. Werkzeugmaschine (10) nach Anspruch 6,
wobei die Öffnungen (41) entlang eines Kreisbogens um die Neigeachse (A_{N}) angeordnet sind.

8. Werkzeugmaschine (10) nach einem der vorstehenden Ansprüche, wobei das Indexelement (37) Seitenwandabschnitte (43a, 43b) aufweist, die den ersten Indexbereich in Neigungsrichtung begrenzen.

9. Werkzeugmaschine (10) nach einem der vorstehenden Ansprüche, wobei die Rasteinheit (19, 21) zu dem Indexelement (37) hin vorgespannt ist.

10. Werkzeugmaschine (10) nach einem der vorstehenden Ansprüche, wobei die Rasteinheit (19, 21) in einer Lagerhülse (47) im Arbeitstisch (11) axial beweglich gelagert ist.

11. Werkzeugmaschine (10) nach einem der vorstehenden Ansprüche, wobei das Indexelement (37) bei einer Neigebewegung des Neigearms (13) mitbewegt wird.

12. Werkzeugmaschine (10) nach einem der vorstehenden Ansprüche, wobei die vorbestimmten Winkelpositionen einer Neigung des Neigearms (13) um 0°, +/- 15°, +/- 22,5° und/oder +/- 30° entsprechen.

13. Werkzeugmaschine (10) nach einem der vorstehenden Ansprüche, wobei sich der vorbestimmte Winkelbereich über einen Neigungswinkel von -45° bis +45° erstreckt.

14. Werkzeugmaschine (10) nach einem der vorstehenden Ansprüche, wobei das Betätigungselement (17) ferner zum Auswählen eines dritten Neigemodus ausgebildet ist, in dem der Neigearm (13) stufenlos innerhalb eines zweiten vorbestimmten Winkelbereichs verstellt werden kann, der größer ist als der erste vorbestimmte Winkelbereich und insbesondere einer Neigung des Neigearms (13) zwischen -48° und 48° entspricht.

15. Werkzeugmaschine (10) nach einem der vorstehenden Ansprüche, umfassend einen Klemmmechanismus zum Feststellen des Neigearms (13) in einer gewünschten Neigeposition.
